# EUROPÄISCHE PATENTSCHRIFT

(11) **EP 2 806 044 B1**
(45) Veröffentlichungstag und Bekanntmachung des Hinweises auf die Patenterteilung: **13.09.2017**
(21) Anmeldenummer: 14002857.2
(22) Anmeldetag: 14.06.2008
(51) Int. Cl.: C22C 9/04

(54) **Kupfer-Zink-Legierung, Verfahren zur Herstellung und Verwendung**
Copper-zinc alloy, method for its manufacture and use
Alliage de cuivre et de zinc, procédé de fabrication et utilisation

(30) Priorität: 28.06.2007 DE 102007029991
(43) Veröffentlichungstag der Anmeldung: 26.11.2014
(62) Teilanmeldung aus: 08010860.8
(73) Patentinhaber: Wieland-Werke AG, 89079 Ulm (DE)
(72) Erfinder: Weber, Kai, 89287 Bellenberg (DE)

(56) Entgegenhaltungen:
- EP-A- 1 712 648
- DE-A1-102005 015 467
- DE-A1-102005 059 391
- JP-A- 2001 355 029

## Beschreibung

Die Erfindung betrifft eine Kupfer-Zink-Legierung, Verfahren zur Herstellung von Rohren oder Stangen aus der Kupfer-Zink-Legierung und deren Verwendung.

Infolge der stark zunehmenden Beanspruchung der Gleitlagerwerkstoffe und der steigenden Betriebsdrücke und -temperaturen in modernen Maschinen, Motoren und Aggregaten steigen die Anforderungen an die Eigenschaften der für einen Einsatz geeigneten Legierungen.

Aus diesem Grunde besteht das Ziel, die Betriebseigenschaften der Lagerwerkstoffe weiterzuentwickeln. Dazu gehört einerseits die Erhöhung der Festigkeitseigenschaften, der Temperaturbeständigkeit des Gefüges und der komplexen Verschleißbeständigkeit bei gleichzeitig ausreichenden Zähigkeitseigenschaften. Andererseits muss die Gleitlagerlegierung hinreichend gute Notlaufeigenschaften besitzen, die dem Verschweißen der Lagerpartner entgegenwirken. Bisher werden für diese Zwecke bleihaltige Kupferlegierungen eingesetzt.

Aus der Druckschrift DE 10 2004 058 318 B4 und DE 10 2005 015 467 A1 sind die Verwendungsmöglichkeiten einer Kupfer-Zink-Legierung für den Einsatz als Ventilführung und Gleitlager mit höherer Temperatur- und Verschleißstabilität bekannt. Die Legierung besteht aus 59 - 73 Gew.-% Kupfer, 2,7 - 8,5 Gew.-% Mangan, 1,5-6,3 Gew.-% Aluminium, 0,2 - 4 Gew.-% Silicium, 0,2 - 3 Gew.-% Eisen, 0 - 2 Gew.-% Blei, 0 -2 Gew.-% Nickel, 0 - 0,4 Gew.-% Zinn und Rest Zink.

Die Erhöhung der Temperatur- und Verschleißstabilität bei diesen Legierungen mit einem äußerst hohen Legierungsanteil an Mangan und Aluminium bedingt in der Regel eine β-Matrix, in die α-Ausscheidungen und Hartphasen eingelagert sind. Die Verschleiß- und Temperaturbeständigkeit dieser Legierungen kann zwar als ausreichend angesehen werden, allerdings beeinflusst diese einseitige Ausrichtung der Gefügeeinstellung die Zähigkeitseigenschaften des Materials negativ.

Des Weiteren ist aus der DE 29 19 478 C2 die Verwendung einer ähnlichen Legierung für Synchronringe bekannt. Bezüglich dieser Verwendung wird als Vorteil gesehen, dass eine verbesserte Verschleißfestigkeit und zugleich ein beträchtlich gesteigerter Reibungsbeiwert auftritt. Weiterhin besitzen die aus der Legierung hergestellten Halbzeuge eine gute Bearbeitbarkeit, wobei sie sich aufgrund des relativ hohen Aluminiumanteils, obwohl gegenüber den bisher gebräuchlichen Sondermessingen ein Härteanstieg bei Raumtemperatur zu verzeichnen ist, gut kaltverformen lassen. Der Aluminiumanteil liegt im Bereich von 4 bis 6 Gew.-%.

Die weitere Druckschrift OS 21 45 710 offenbart eine bei hoher Temperatur verschleißfeste Legierung auf Kupferbasis für einen Ventilsitz in Brennkraftmaschinen, die ebenfalls einen vergleichsweise hohen Aluminiumanteil von 5 bis 12 Gew.-% aufweist. Der Aluminiumanteil im angegebenen Bereich verbessert die Korrosionsbeständigkeit zusätzlich zur Verstärkungswirkung auf die Matrix. Eine weitere Steigerung der Verschleißfestigkeit findet durch die Bildung einer intermetallischen Phase aus Mangan und Silicium statt.

Aus der Auslegeschrift 1 194 592 ist ein Verfahren zur Herstellung von Synchronringen bekannt, die sich durch einen hohen und gleichbleibenden Reibungskoeffizienten, eine hohe Verschleißfestigkeit und gute spangebende Bearbeitbarkeit auszeichnen. Hierzu werden auch Glühbehandlungen der weitgehend aus β-Phase bestehenden Legierung zwischen 200 bis 500 °C vorgeschlagen, um eine α-Ausscheidung von 5 bis 50 % zu erreichen.

In den genannten Druckschriften wird meist auch ein gewisser Bleigehalt zur besseren spanenden Bearbeitbarkeit vorgesehen.

Der Erfindung liegt die Aufgabe zugrunde, eine Kupfer-Zink-Legierung mit verbesserter Kaltumformbarkeit, hoher Härte und Temperaturbeständigkeit bereitzustellen.

Die Erfindung wird bezüglich der Legierung durch die Merkmale des Anspruchs 1 wiedergegeben und bezüglich des Verfahrens zur Herstellung von Rohren oder Stangen aus der Legierung durch die Merkmale der Ansprüche 8 und 9 sowie der Verwendung der Legierung durch den Anspruch 11. Die weiteren rückbezogenen Ansprüche geben vorteilhafte Aus- und Weiterbildungen der Erfindung wieder.

Die Erfindung schließt die technische Lehre ein, dass eine Kupfer-Zink-Legierung besteht aus (in Gew.-%):
28,0 bis 36,0 % Zn,
0,5 bis 2,3 % Si,
1,5 bis 2,5 % Mn,
0,2 bis 3,0 % Ni,
0,5 bis 1,5 % Al,
0,1 bis 1,0 % Fe,
wahlweise noch bis maximal 0,1 % Pb,
wahlweise noch bis maximal 0,2 % Sn,
wahlweise noch bis maximal 0,1 % P,
wahlweise noch bis 0,08 % S,
Rest Cu und unvermeidbare Verunreinigungen,
mit in der Matrix eingelagerten Eisen-Nickel-Mangan-haltigen Mischsiliziden.

Die Erfindung geht dabei von der Überlegung aus, eine Kupfer-Zink-Legierung mit eingelagerten Eisen-Nickel-Mangan-haltigen Mischsiliziden bereitzustellen, die mit Hilfe des kontinuierlichen oder halbkontinuierlichen Stranggussverfahrens hergestellt werden kann. Durch die Mischsilizidbildung weist die Kupfer-Zink-Legierung einen hohen Hartphasenanteil auf, der zu einer Verbesserung des Werkstoffwiderstandes gegen den abrasiven Verschleiß beiträgt. Außerdem bedingt der hohe Anteil an Siliziden aufgrund deren niedrigen Verschweißneigung eine bessere Beständigkeit gegen den adhäsiven Verschleiß.

So weist die Legierung hohe Härte- und Festigkeitswerte auf, trotzdem wird ein notwendiges Maß an Duktilität, ausgedrückt durch den Bruchdehnungswert bei einem Zugversuch, gewährleistet. Mit dieser Eigenschaftskombination ist der Erfindungsgegenstand besonders geeignet für Pb-freie Gleitelemente in Motoren, wie beispielsweise Kolbenaugenbuchsen, und in Getrieben.

Beim Gießen der Legierung findet zunächst eine frühe Ausscheidung von eisen- und nickelreichen Mischsiliziden statt. Diese Ausscheidungen können bei weiterem Wachstum zu Eisen-Nickel-Mangan-haltigen Mischsiliziden mit beträchtlicher Größe mit oft stängeliger Form heranwachsen. Des Weiteren bleibt auch ein beträchtlicher Anteil eher klein mit globularer Gestalt, der in der Matrix fein verteilt vorliegt. Insbesondere die fein verteilten Silizide werden als Grund dafür gesehen, dass eine Stabilisierung der β-Phase stattfindet. Dies liefert einen wichtigen Beitrag zur Erhöhung der Temperaturbeständigkeit und komplexen Verschleißbeständigkeit.

Der besondere Vorteil der erfindungsgemäßen Legierung beruht auf einer für die Einsatzzwecke optimierten Eigenschaftskombination in Form einer Erhöhung der Festigkeit, der Temperaturbeständigkeit des Gefüges und der komplexen Verschleißbeständigkeit bei gleichzeitig ausreichenden Zähigkeitseigenschaften. Zudem besitzt die Legierung gute Notlaufeigenschaften bei Gleitlageranwendungen, die dem Verschweißen der Lagerpartner entgegenwirken. Zusätzlich berücksichtigt die beanspruchte Werkstofflösung aufgrund des gegenüber gebräuchlichen Legierungen substituierten Bleigehaltes die Notwendigkeit einer umweltfreundlichen bleifreien Legierungsalternative.

Außerdem ist dieser Werkstoff für besondere Anwendungen prädestiniert, bei denen es trotz hoher Anforderungen an die Härte und die Festigkeit auf ein notwendiges Maß an Plastifizierbarkeit ankommt. Dies ist beispielsweise auf dem Gebiet der hydraulischen Aggregate der Fall, deren Gleitschuhe teilweise durch Einpressen der jeweiligen Verbundpartner realisiert werden. Besonders auf diesem Gebiet des hydraulischen Maschinenbaus, beispielsweise bei Axialkolbenmaschinen, ist bei zukünftigen Entwicklungen mit steigenden Betriebsdrücken zu rechnen, die höhere Ansprüche an die Festigkeitseigenschaften der eingesetzten Materialien zur Folge haben.

In bevorzugter Ausgestaltung kann die erfindungsgemäße Legierung
28,0 bis 36,0 % Zn,
0,5 bis 1,5 % Si,
1,5 bis 2,5 % Mn,
0,2 bis 1,0 % Ni,
0,5 bis 1,5 % Al,
0,1 bis 1,0 % Fe enthalten.

Durch die etwas reduzierten Elementanteile von Silicium und Nickel lässt sich die Eisen-Nickel-Mangan-Mischsilizidbildung besonders auf eine optimierte Eigenschaftskombination, insbesondere in Bezug auf das notwendige Maß an Duktilität ausrichten.

In weiterer bevorzugter Ausgestaltung kann die erfindungsgemäße Legierung
28,0 bis 36,0 % Zn,
1,0 bis 2,3 % Si,
1,5 bis 2,5 % Mn,
1,5 bis 3,0 % Ni,
0,5 bis 1,5 % Al,
0,1 bis 1,0 % Fe enthalten.

In diesen vorstehend genannten Druckschriften wird meist auch ein gewisser Bleigehalt zur besseren spanenden Bearbeitbarkeit vorgesehen.

Aus der Druckschrift DE 10 2005 059 391 A1 ist eine Kupfer-Zink-Legierung für Synchronringe bekannt. Sie besteht aus 55 bis 75 Gew.-% Kupfer, 0,1 bis 8 Gew.% Aluminium, 0,3 bis 3,5 Gew.-% Eisen, 0,5 bis 8 Gew.-% Mangan, 0,3 bis 5 Gew.-% Silizium, Rest Zink sowie unvermeidbare Verunreinigungen. Wahlweise können des Weiteren bis zu 5 % Nickel, bis zu 0,1 % Blei, bis zu 3 % Zinn, bis zu 0,1 % Kobalt, bis zu 0,05 % Titan und bis zu 0,02 % Phosphor enthalten sein. Beschrieben sind die intermetallischen Phasen, die sich aus den Elementen Mn, Fe und Si bilden. Nicht näher erörtert wird die Phasenzusammensetzung der Matrix, die insbesondere aufgrund der äußerst großen Anteilsbereiche für die Elemente Zn und Al ganz verschiedenartig aufgebaut sein kann.

Der Erfindung liegt die Aufgabe zugrunde, eine Kupfer-Zink-Legierung mit verbesserter Kaltumformbarkeit, hoher Härte und Temperaturbeständigkeit bereitzustellen.

Die Erfindung wird bezüglich der Legierung durch die Merkmale des Anspruchs 1 wiedergegeben und bezüglich des Verfahrens zur Herstellung von Rohren oder Stangen aus der Legierung durch die Merkmale der Ansprüche 4 und 5 sowie der Verwendung der Legierung durch den Anspruch 7. Die weiteren rückbezogenen Ansprüche geben vorteilhafte Aus- und Weiterbildungen der Erfindung wieder.

Die Erfindung schließt die technische Lehre ein, dass eine Kupfer-Zink-Legierung besteht aus (in Gew.-%):
28,0 bis 36,0 % Zn,
0,5 bis 2,3 % Si,
1,5 bis 2,5 % Mn,
0,2 bis 3,0 % Ni,
0,5 bis 1,5 % Al,
0,1 bis 1,0 % Fe,
wahlweise noch bis maximal 0,1 % Pb,
wahlweise noch bis maximal 0,2 % Sn,
wahlweise noch bis maximal 0,1 % P,
wahlweise noch bis 0,08 % S,
Rest Cu und unvermeidbare Verunreinigungen,
mit in der Matrix eingelagerten Eisen-Nickel-Mangan-haltigen Mischsiliziden.

Die Erfindung geht dabei von der Überlegung aus, eine Kupfer-Zink-Legierung mit eingelagerten Eisen-Nickel-Mangan-haltigen Mischsiliziden bereitzustellen, die mit Hilfe des kontinuierlichen oder halbkontinuierlichen Stranggussverfahrens hergestellt werden kann. Durch die Mischsilizidbildung weist die Kupfer-Zink-Legierung einen Auf dem Gebiet einer weiteren Anwendung, der hydraulischen Maschinen- und Anlagentechnologie, ist in der zukünftigen Entwicklung mit einer höheren Beanspruchung der Gleitlager durch steigende Betriebsdrücke zu rechnen. Neben einer Festigkeitserhöhung gewährleistet diese Ausgestaltung das erforderliche R_{p0,2}/Rₘ-Verhältnis im Bereich von 0,5 bis 0,95. Dies ist eine wichtige Voraussetzung für die Herstellung von Lagerstellen durch Pressverbund der Gleitpartner. Diese Weiterentwicklung der Kupfer-Zink-Legierung gewährleistet eine herausragende Beständigkeit gegenüber dem abrasiven und adhäsiven Verschleiß.

Ein weiterer Aspekt der Erfindung betrifft ein Verfahren zur Herstellung von Rohren oder Stangen aus der erfindungsgemäßen Kupfer-Zink-Legierung, wobei eine Weiterbearbeitung der Legierung folgende Schritte umfasst:
- Strangpressen in einem Temperaturbereich von 600 bis 800 °C,
- zumindest eine Kaltumformung.

Diese Rohre und Stangen können als Vormaterial für die spangebende Fertigung von Gleitelementen dienen.

Ein weiterer alternativer Aspekt der Erfindung betrifft ein Verfahren zur Herstellung von Rohren oder Stangen aus der erfindungsgemäßen Kupfer-Zink-Legierung, wobei eine Weiterbearbeitung der Legierung folgende Schritte umfasst:
- Strangpressen in einem Temperaturbereich von 600 bis 800 °C,
- eine Kombination aus zumindest einer Kaltumformung mit zumindest einer Glühung in einem Temperaturbereich von 250 bis 700 °C.

Mittels einer Kombination von Kaltumformung durch Ziehen und einer oder mehrerer Zwischenglühungen der Stangen und Rohre im Temperaturbereich von 250 bis 700°C ist es möglich, eine feine Verteilung des heterogenen Gefüges einzustellen.

Auf diese Weise wird der Forderung nach der Verbesserung der komplexen Betriebseigenschaften der Lagerwerkstoffe entsprochen, da es in modernen Maschinen, Motoren, Getrieben und Aggregaten zu einer stark zunehmenden Beanspruchung der Gleitelemente kommt. Mit dieser besonderen Ausgestaltung der Kupfer-Zink-Legierung wird eine signifikante Erhöhung von Zugfestigkeit Rₘ, Dehngrenze R_{p0,2} sowie der Härte des Werkstoffes erzielt. Gleichermaßen bewegt sich die Bruchdehnung der Legierung auf hinreichend hohem Niveau, womit die notwendigen Zähigkeitseigenschaften eingestellt werden. Zudem gewährleistet der außerordentlich hohe Gehalt an Hartphasen, insbesondere der Eisen-Nickel-Mangan-haltigen Mischsilizide sowie die heterogene Matrixstruktur aus α- und β-Phase eine zielgerichtete komplexe Verschleißbeständigkeit der Bauteile aus diesem Werkstoff.

Bereits bekannt ist der Zusammenhang zwischen der Höhe und Verteilung des Anteils der β-Phase und der Temperaturbeständigkeit des Gefüges. Da jedoch diese kubisch-raumzentrierte Kristallart eine unverzichtbare festigkeitssteigernde Funktion in den Kupfer-Zink-Legierungen übernimmt, sollte die Minimierung des β-Gehaltes nicht ausschließlich im Vordergrund stehen. Mittels der Fertigungsfolge Strangpressen / Ziehen / Zwischenglühungen kann das Gefüge der Kupfer-Zink-Legierung in seiner Phasenverteilung derart modifiziert werden, dass es neben einer hohen Festigkeit zusätzlich eine hinreichende Temperaturbeständigkeit aufweist.

In bevorzugter Ausgestaltung kann sich nach dem Umformen zumindest eine Entspannungsglühung in einem Temperaturbereich von 250 bis 450 °C anschließen.

Im Fertigungsverlauf besteht die Notwendigkeit, anhand einer oder mehrerer Entspannungsglühungen die Höhe der Eigenspannungen zu reduzieren. Die Absenkung der Eigenspannungen ist auch bedeutsam für die Gewährleistung einer ausreichenden Temperaturbeständigkeit des Gefüges und für die Sicherstellung einer genügenden Geradheit der Stangen und Rohre.

Des Weiteren findet, wie bereits vorstehend ausgeführt, die erfindungsgemäße Kupfer-Zink-Legierung für Gleitelemente in Verbrennungsmotoren, Getrieben oder hydraulischen Aggregaten Verwendung.

Weitere Ausführungsbeispiele der Erfindung werden anhand einer Tabelle näher erläutert. Es wurden Gussbolzen der erfindungsgemäßen Kupfer-Zink-Legierung durch Kokillenguss hergestellt. Die chemische Zusammensetzung der Abgüsse geht aus Tab. 1 hervor.

**Tabelle 1: Chemische Zusammensetzung der Gussbolzen (Ausführung A)**

| Nr. | Cu [%] | Zn [%] | Si [%] | Mn [%] | Ni [%] | Sn [%] | Al [%] | Fe [%] |
|---|---|---|---|---|---|---|---|---|
| Leg.-Typ 1 | 64,1 | 31,2 | 1,20 | 1,76 | 0,40 | < 0,01 | 0,92 | 0,30 |
| Leg.-Typ 2 | 63,6 | 31,7 | 1,17 | 1,75 | 0,55 | < 0,01 | 0,87 | 0,33 |
| Leg.-Typ 3 | 59,3 | 33,4 | 1,7 | 2,0 | 2,3 | < 0,01 | 0,9 | 0,5 |

Fertigungsfolge beim Leg.-Typ 1 und 2:
- Strangpressen zu Rohren bei der Temperatur von 700°C.
- Kombination von Kaltumformung/Zwischenglühungen (650°C/50-60 min)/ Richten/Entspannungsglühungen (300-350°C/3 h)

Nach durchlaufener Fertigung befinden sich die mechanischen Eigenschaften der Rohre auf dem Niveau, das in Zahlenwerten in Tab. 2 dargestellt ist.

**Tabelle 2: Mechanische Eigenschaften der Rohre (Leg.-Typ 1 und Leg.-Typ 2)**

| Nr. | β-Gehalt [%] | KornGröße [µm] | Rm [MPa] | R_{p0,2} [MPa] | R_{p0,2}/ Rₘ | A5 [%] | HB |
|---|---|---|---|---|---|---|---|
| Leg.-Typ 1 | 5 | 5-10 | 715 | 656 | 0,92 | 12,0 | 222 |
| Leg.-Typ 2 | 5-10 | 10-15 | 660 | 577 | 0,87 | 13,2 | 207 |

### Fertigungsfolge:

- Warmwalzen bei der Temperatur von 750°C im Labormaßstab
- Kombination von Kaltumformung/Entspannungsglühungen (300-400°C/2-3 h)

Nach durchlaufener Fertigung befinden sich die mechanischen Eigenschaften der Rohre auf dem Niveau, das in Zahlenwerten in Tab. 3 dargestellt ist.

**Tabelle 3: Mechanische Eigenschaften (Leg.-Typ 3)**

| Nr. Leg.-Typ 3 | β-Gehalt [%] | Korngröße [µm] | Rₘ [MPa] | R_{p0,2} [MPa] | R_{p0,2}/ Rₘ | A5 [%] | HB |
|---|---|---|---|---|---|---|---|
| Behandlung 1 (300°C/2 h) | 30-40 | 10 | 674 | 399 | 0,59 | 7,3 | 222 |
| Behandlung 2 (400°C/2 h) | 30 - 40 | 10 | 621 | 424 | 0,68 | 13.1 | 206 |

## Patentansprüche

1. Kupfer-Zink-Legierung, bestehend aus (in Gew.-%):
28,0 bis 36,0 % Zn,
0,5 bis 1,5 % Si,
1,5 bis 2,5 % Mn;
0,2 bis 1,0 % Ni,
0,5 bis 1,5 % Al,
0,1 bis 1,0 % Fe,
wahlweise noch bis maximal 0,1 % Pb,
wahlweise noch bis maximal 0,1 % P,
wahlweise noch bis 0,08 % S,
Rest Cu und unvermeidbare Verunreinigungen,
**dadurch gekennzeichnet,**
- **dass** in der Matrix Eisen-Nickel-Mangan-haltige Mischsilizide eingelagert sind, wodurch die Kupfer-Zink-Legierung einen hohen Hartphasenanteil aufweist, der zu einer Verbesserung des Werkstoffwiderstandes gegen den abrasiven Verschleiß beiträgt und eine bessere Beständigkeit gegen den adhäsiven Verschleiß bedingt.
- **dass** nach einer Weiterbearbeitung, die zumindest eine Warmumformung bzw. Kaltumformung und weitere Glühschritte beinhaltet, das Gefüge aus Einlagerungen an β-Phase, die eine unverzichtbare festigkeitssteigernde Funktion in der Kupfer-Zink-Legierung übernimmt, von bis zu 45 Vol.-% und Eisen-Nickel-Mangan-haltigen Mischsiliziden als Hartphasen bis zu 20 Vol.-% in einer α-Matrix besteht,
- **dass** mit den β-Einlagerungen und Hartphasen unterschiedlicher Größenverteilung in einer α-Matrix eine vorteilhafte Temperaturbeständigkeit des Gefüges mit hinreichenden Zähigkeitseigenschaften sowie eine zweckentsprechende komplexe Verschleißbeständigkeit gewährleistet ist,
- **dass** im Gefüge die Eisen-Nickel-Mangan-haltigen Mischsilizide mit stängeliger Form vorliegen sowie in der Matrix fein verteilte eisen- und nickelreiche Mischsilizide mit globularer Gestalt enthalten sind, die eine Stabilisierung der β-Phase verursachen und damit einen wichtigen Beitrag zur Erhöhung der Temperaturbeständigkeit und der komplexen Verschleißbeständigkeit liefern.

2. Kupfer-Zink-Legierung nach Anspruch 1, **dadurch gekennzeichnet, dass** im Gusszustand das Gefüge mit einem Gehalt der β-Phase bis zu 50 Vol.-% vorliegt.

3. Verfahren zur Herstellung von Rohren oder Stangen aus einer Kupfer-Zink-Legierung nach einem der Ansprüche 1 oder 2, **dadurch gekennzeichnet, dass** eine Weiterbearbeitung der Legierung folgende Schritte umfasst:
- Strangpressen in einem Temperaturbereich von 600 bis 800 °C,
- zumindest eine Kaltumformung.

4. Verfahren zur Herstellung von Rohren oder Stangen aus einer Kupfer-Zink-Legierung nach einem der Ansprüche 1 oder 2, **dadurch gekennzeichnet, dass** eine Weiterbearbeitung der Legierung folgende Schritte umfasst:
- Strangpressen in einem Temperaturbereich von 600 bis 800 °C,
- eine Kombination aus zumindest einer Kaltumformung mit zumindest einer Glühung in einem Temperaturbereich von 250 bis 700 °C.

5. Verfahren zur Herstellung von Rohren oder Stangen aus einer Kupfer-Zink-Legierung nach Anspruch 3 oder 4, **dadurch gekennzeichnet, dass** sich nach dem Umformen zumindest eine Entspannungsglühung in einem Temperaturbereich von 250 bis 450 °C anschließt.

6. Verwendung einer Kupfer-Zink-Legierung nach einem der Ansprüche 1 oder 2 für Gleitelemente in Verbrennungsmotoren, Getrieben oder hydraulischen Aggregaten.

## Claims

1. Copper-zinc alloy, comprising (in wt.%)
28.0 to 36.0 % Zn,
0.5 to 1.5 % Si,
1.5 to 2.5 % Mn,
0.2 to 1.0 % Ni,
0.5 to 1.5 % Al,
0.1 to 1.0 % Fe,
optionally in addition up to a maximum of 0.1 % Pb,
optionally in addition up to a maximum of 0.1 % P,
optionally in addition up to 0.08 % S,
remainder Cu and unavoidable impurities,
**characterised in that**
- iron-nickel-manganese-containing mixed silicides are embedded in the matrix, as a result of which the copper-zinc alloy has a high hard phase content that contributes to improving the resistance of the material to abrasive wear and causes better resistance to adhesive wear.
- **in that**, after further processing, which includes at least one hot forming or cold forming step and additional annealing steps, the structure comprises up to 45 vol.% β phase dispersions that assume an indispensable, strength-increasing function in the copper-zinc alloy, and up to 20 vol.% iron-nickel-manganese-containing mixed silicides as hard phases in an α matrix,
- **in that**, by means of the ß dispersions and hard phases having different size distributions in an α matrix, an advantageous temperature resistance of the structure together with sufficient toughness properties and an expedient, complex resistance to wear is achieved,
- **in that** stalk-shaped iron-nickel-manganese-containing mixed silicides are present in the structure and finely distributed globular iron-rich and nickel-rich mixed silicides are contained in the matrix, which silicides cause the ß phase to stabilise and thus make an important contribution to improving the temperature resistance and the complex wear resistance.

2. Copper-zinc alloy according to claim 1, **characterised in that** the structure as cast is present having a ß phase content of up to 50 vol.%.

3. Method for producing pipes or rods from a copper-zinc alloy according to either claim 1 or claim 2, **characterised in that** further processing of the alloy comprises the following steps:
- extrusion in a temperature range of from 600 to 800 °C,
- at least one cold forming step.

4. Method for producing pipes or rods from a copper-zinc alloy according to either claim 1 or claim 2, **characterised in that** further processing of the alloy comprises the following steps:
- extrusion in a temperature range of from 600 to 800 °C,
- a combination of at least one cold forming step with at least one annealing step in a temperature range of from 250 to 700 °C.

5. Method for producing pipes or rods from a copper-zinc alloy according to either claim 3 or claim 4, **characterised in that** at least one stress relief annealing step in a temperature range of from 250 to 450 °C follows the forming step.

6. Use of a copper-zinc alloy according to either claim 1 or claim 2 for sliding elements in internal combustion engines, transmissions or hydraulic systems.

## Revendications

1. Alliage cuivre-zinc consistant en (en % en poids) :
28,0 à 36,0 % de Zn,
0,5 à 1,5 % de Si,
1,5 à 2,5 % de Mn,
0,2 à 1,0 % de Ni,
0,5 à 1,5 % de Al,
0,1 à 1,0 % de Fe,
au choix encore jusqu'à au maximum 0,1 % de Pb,
au choix encore jusqu'à au maximum 0,1 % de P,
au choix encore jusqu'à 0,08 % de S,
le reste de Cu et d'impuretés inévitables,
**caractérisé en ce que**
- des siliciures mixtes contenant fer-nickel-manganèse sont inclus dans la matrice, moyennant quoi l'alliage cuivre-zinc présente une proportion élevée de phases dures, qui contribue à une amélioration de la résistance du matériau à l'usure abrasive et conditionne une meilleure résistance à l'usure adhésive,
- après un traitement supplémentaire, qui comprend au moins un formage à chaud ou un formage à froid et d'autres étapes de recuit, la structure se compose d'incrustations de phase β, qui assure une fonction indispensable de hausse de la résistance dans l'alliage cuivre-zinc, pouvant aller jusqu'à 45 vol%, et de siliciures mixtes contenant fer-nickel-manganèse en tant que phases dures jusqu'à 20 vol% dans une matrice α,
- avec les incrustations β et les phases dures de différente distribution de tailles dans une matrice α, une résistance avantageuse à la température de la structure avec des propriétés de ténacité suffisantes et une résistance à l'usure complexe correspondant au but est garantie,
- dans la structure, les siliciures mixtes contenant fer-nickel-manganèse se présentent sous forme d'écheveaux et dans la matrice, les siliciures mixtes riches en fer et en nickel finement répartis sont présents sous forme globulaire, provoquant une stabilisation de la phase β et apportant donc une contribution importante à la hausse de la résistance à la température et à la résistance à l'usure complexe.

2. Alliage cuivre-zinc selon la revendication 1, **caractérisé en ce que**, à l'état de fonte, la structure se présente avec une teneur en phase β jusqu'à 50 vol%.

3. Procédé de fabrication de tubes ou de tiges en un alliage cuivre-zinc selon l'une des revendications 1 ou 2, **caractérisé en ce qu'**une re-transformation de l'alliage comprend les étapes suivantes :
- boudinage dans une plage de températures de 600 à 800 °C,
- au moins un formage à froid.

4. Procédé de fabrication de tubes ou de tiges en un alliage cuivre-zinc selon l'une des revendications 1 ou 2, **caractérisé en ce qu'**une re-transformation de l'alliage comprend les étapes suivantes :
- boudinage dans une plage de températures de 600 à 800 °C,
- une combinaison d'au moins un formage à froid avec au moins un recuit dans une plage de température de 250 à 700 °C.

5. Procédé de fabrication de tubes ou de tiges en un alliage cuivre-zinc selon la revendication 3 ou 4, **caractérisé en ce qu'**au moins un recuit de détente dans une plage de températures de 250 à 450 °C est adjoint après le formage.

6. Utilisation d'un alliage cuivre-zinc selon l'une des revendications 1 ou 2 pour des éléments coulissants dans des moteurs à combustion, des engrenages ou des groupes hydrauliques.
